# EUROPEAN PATENT SPECIFICATION

(11) **EP 2 921 696 B1**
(45) Date of publication and mention of the grant of the patent: **30.11.2016**
(21) Application number: 15159601.2
(22) Date of filing: 18.03.2015
(51) Int. Cl.: F03B 17/02

(54) **An apparatus for production of energy from a renewable source**
Gerät zur regenerativen Energiegewinnung
Appareil pour la production d'énergie à partir de sources d'énergie renouvelables.

(30) Priority: 19.03.2014 IT BO20140141
(43) Date of publication of application: 23.09.2015
(73) Proprietor: Torresi, Luciano, 62010 Montecosaro (Macerata) (IT); Torresi, Michela, 62010 Montecosaro (Macerata) (IT)
(72) Inventor: TORRESI, Luciano, 62010 MONTECOSARO (MACERATA) (IT)
(74) Representative: Dall'Olio, Christian

(56) References cited:
- GB-A- 1 601 398
- US-A- 4 083 186
- US-A1- 2009 165 455
- US-A1- 2011 221 209

## Description

The present invention relates to the technical sector concerning apparatus for production of energy.

GB 1601398 discloses an apparatus comprising a tank whose bottom is at a lower height with respect to the free surface of a hydraulic basin to which it is connectable with the consent of first intercepting means; the tank is further connected to a discharge basin with the consent of second intercepting means.

A floating shell is arranged in the tank, connected to generating means(for example a pump), actuated according to the vertical movement of the shell.

The filling of the tank causes the lift of the shell; the descent of the shell is caused by the emptying of the tank and the filling of the shell with water.

This filling is obtained by opening a valve located on the bottom of the shell.

The degree of filling of the shell depends on the section of the hole associated to the valve and the level between the free surfaces of the tank and the shell; when the difference in level is eliminated, the valve is closed, while the valve is re-opened following emptying of the tank.

The descent of the shell is caused, in order, by the filling thereof and the emptying of the tank.

The drawbacks of this apparatus are consequent to the fact that the filling of the shell is very slow and depends on the structural characteristics thereof and, further, the filling is actuated using water coming from the tank.

Also known is document US 4,083,186 which discloses an apparatus constituted by a recipient, kept full of water, internally of which tanks are included, having an equal number and located side-by-side, each of which contains a shell that activates a hydraulic pump.

Each tank communicates with a corresponding tank, with the recipient and with the outside.

Each shell is filled, for facilitating the descent, by water coming from a tilting tray filled in turn by a nozzle supplied with water coming from the recipient.

This is a very complex technical solution, which leads to a slow descent of the shells due to the fact that a considerable amount of water discharged from a tank is introduced into the corresponding tank.

The advantage of the present invention is that it discloses an apparatus that obviates the drawbacks described above, in particular an apparatus for the production of energy from renewable sources, realised by the combination of means and organs in themselves of known type which, appropriately combined with one another determine the production of energy from a renewable source, specifically from a liquid.

A further advantage of the invention is that it discloses an apparatus for the production of energy which is simple to realise and for the actuation of which no particularly significant technical knowledge is required.

The above advantages of the invention are obtained according to the contents of the claims.

The characteristics of the invention will emerge in the following in which a preferred, though not exclusive, embodiment is described, with reference to the accompanying tables of drawings, in which:
figure 1 illustrates a schematic view of an apparatus for production of energy from a renewable source of the present invention;
figure 1 A is a larger-scale illustration of detail K of figure 1;
figures 2, 3, 4 show different views of the apparatus for production of energy consequent to functioning thereof;
figures 5, 6, 7 show different views of the apparatus for production of energy relating to a functioning variant thereof.

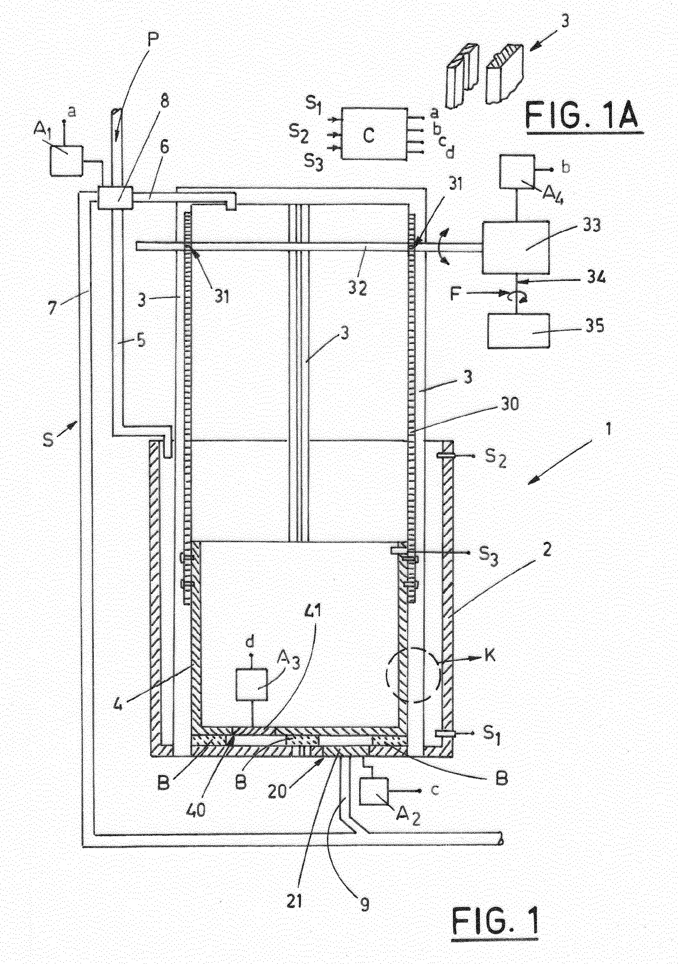

With reference to figure 1, reference numeral 1 denotes an apparatus for production of energy from a renewable source.

The apparatus comprises: a supply system (S) of a liquid, for example water from a stream/river; a tank (2), internally of which at least a part of a flow of the liquid is channelled; a shell (4) positioned internally of the tank (2), which in the non-operating configuration of the apparatus illustrated in figure 1, rests on appropriate supports (B), and in the operating configuration is vertically guided by guide means (3) of a known type (figure 1A) constrained to the bottom of the tank (2) and, for example, suitably connected so as to define a frame; a transmission system actuated by the vertical movement in both directions of the shell (4) internally of the tank (2).

The liquid supply system (S) comprises: a primary conduit (P) where at least a part of the liquid of the renewable source is channelled; a second conduit (5) opening internally of the tank (2); a third conduit (6), destined, following detection of the maximum liquid level contained in the tank (1), for introducing a part of the liquid internally of the shell (4) so as to facilitate the downwards vertical movement of the shell (4); a discharge conduit (7); switching means (8) associated to the primary conduit (P) which channel, according to predefined criteria, the liquid from the primary conduit (P) into the second conduit (5), or into the third conduit (6), or into the discharge conduit (7); a first command device (A₁), destined to control and actuate the switching means (8) for determining the opening/closing of the second conduit (5), or third conduit (6), or discharge conduit (7).

The tank (2) comprises: at least an outlet (20), realised on a bottom of the tank (2) and to which a first closing device (21), for example a gate, is associated, specially controlled and actuated in opening/closing by a second command device (A₂), the outlet (20) communicating via a fourth conduit (9) with the discharge conduit (7); a first level detector (S₁), associated to an internal wall of the tank (2) in proximity of a bottom thereof, for detecting a predetermined minimum level of liquid present in the tank (2); a second level detector (S₂), associated to an internal wall of the tank (2) in proximity of the upper edge thereof, for detecting a predetermined maximum level of liquid contained in the tank (2).

The shell (4) comprises: at least an opening (40), realised on the bottom of the shell (4) to which a second closing device (41), for example a gate, is associated, appropriately controlled and actuated in opening/closing by a third command device (A₃); at least a third level detector (S₃) associated to the internal wall of the shell (4) in proximity of the upper edge, for detecting a predetermined maximum level of liquid contained in the shell (4).

The transmission system comprises: detecting means of the vertical movement (30) of the shell (4), for example two racks, blocked in opposite positioned externally of the shell (4), and parallel to opposite means for guiding (3), such as to couple, for example, with corresponding pinions (31) associated to a shaft (32) connected to a motion transmission group (33) of known type, which moves an output shaft (34) and, consequently, a final actuator (35), for example an electric generator; a fourth command device (A₄) for controlling the motion transmission group (33) so as to define a motion according to a single direction (F) of the output shaft (34), denoted by arrow F (figure 1) for actuating the final actuator (35).

The apparatus is controlled by a command and control unit (C) which manages the first, second, third, fourth command device (A₁, A₂, A₃, A₄) by mean of connections (a, c, d, b) and receives data detected by the first, second and third level detectors (S₁, S₂, S₃), associated to the tank (2) and the shell (4), as will more fully emerge in the following.

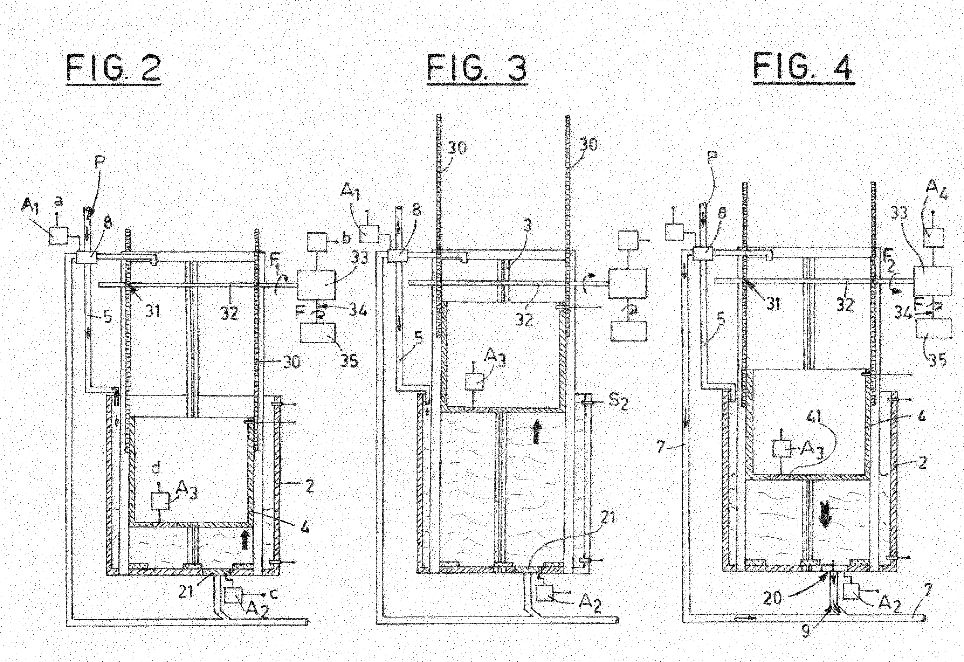

The apparatus for production of energy (1) is normally positioned in the vicinity of a stream/river and at least a part of the flow of the stream/river is switched into the primary conduit (P), for example by exploiting the natural inclination of the stream/river or using known systems which carry a part of the flow into the primary conduit (P); the switching means (8) are commanded by the first command device (A₁), which is activated by the control unit (C) so as to convey the flow of water in inlet into the primary conduit (P) into the second conduit (5) (figure 2), so that the flow of water is channelled into the tank (2) and begins filling the tank (2).

As the level of the water in the tank (2) increases, the shell (4) begins to move vertically upwards (Archimedes upthrust) and following this displacement the transmission system is activated.

With the upwards vertical movement of the shell (2) (rising step), the racks (30) cause the rotation of the pinions (31) and consequently of the shaft (32) in the direction of the arrow F₁ (figure 2); this movement activates the group (33) and the fourth command device (A₄) is actuated by the control unit (C) so that the organs defining the motion transmission group are controlled so as to determine a movement in direction (F) of the output shaft (34) so as to actuate the final actuator (35).

The shell (2) will continue in vertical displacement upwards up to when the second level detector (S₂) detects the maximum water level that the tank (2) can contain (figure 3) and sends this datum to the control and command unit (C), which commands both the first command device (A₁) to pilot the switching means (8) for occluding the second conduit (5) and switch the flow of water into the discharge conduit (7) (figure 4), and the second command device (A₂) so as to determine the opening of the first closing device (21) and enable the water contained in the tank (2) to be channelled, through the outlet (20), into the fourth conduit (9) and consequently be conveyed into the discharge conduit (7).

Following the initial emptying of the tank (2), the shell (4) starts to displace vertically downwards, and with this movement the racks (30) cause the inverse rotation of the pinions (31) and, consequently, of the shaft (32) in the direction of arrow F₂ (figure 4) opposite the rotation direction F1 of the shaft (32) during the upwards vertical movement of the shell (4).

The descent step activates the group (33) and the fourth command device (A₄) is actuated by the control unit (C) so that the organs defining the motion transmission group are controlled so as to maintain the same rotation of the output shaft (34) in direction F, in order to continue supplying the final actuator (35).

On reaching the minimum level of water contained in the tank (2), detected by the first level detector (S₁), the control and command unit (C) will activate both the second command device (A₂), for determining the closing of the first closing device (21) to obstruct the outlet (20), and the first command device (A₁), which will command the switching means (8) for newly conveying the flow of water coming from the primary conduit (P) into the second conduit (5) so that the flow of water is channelled into the tank (2) and newly begins the filling thereof and the rising cycle and, thereafter, the descent cycle of the shell (4) in the tank (2), as described in the foregoing.

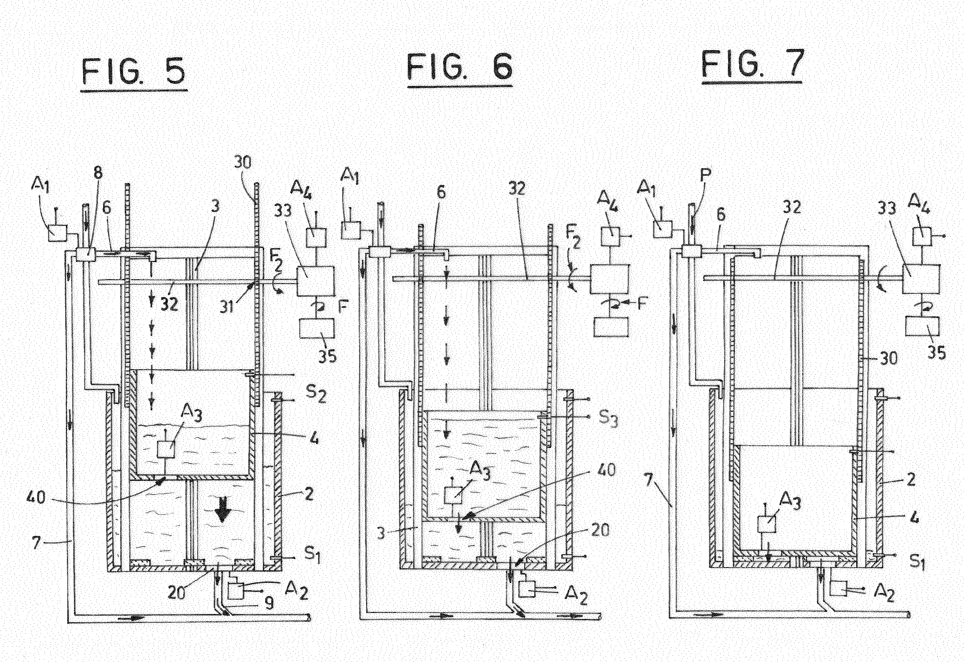

In an operating variant of the apparatus (1) (figures 5-7), following the detecting of the maximum level of water contained in the tank (2), the control and command unit (C) will command: the first command device (A₁) to pilot the switching means (8) for occluding the second conduit (5), switch a part of the flow of water into the discharge conduit (7) and another part of the flow of water into the third conduit (6) (figure 5), so as to be introduced internally of the shell (4); the second command device (A₂) so as to determine the opening of the first closing device (21) and enable the water contained in the tank (2) to be channelled, through the outlet (20), into the fourth conduit (9), to be conveyed into the discharge conduit (7); the third command device (A₃) with the delayed activation thereof, so as to determine the opening of the second closing device (41) and discharge a part of the water accumulated in the shell (4) into the tank (2), through the opening (40), (figure 5).

Following these activations an initial downwards vertical movement of the shell (4) is determined.

The downwards vertical movement of the shell (4), in this variant, is facilitated by the combined action between the emptying of the tank (2) and the channelling of part of the flow of water into the shell (4); with the downwards vertical movement (descent step), the racks (30) invoke the inverse rotation of the pinions (31) and, consequently, of the shaft (32) in the direction of arrow (F₂) opposite the rotation direction (F₁) of the shaft (32) during the upwards vertical movement (rising step) of the shell (4).

In this descent step is activated the motion transmission group (33) and the fourth command device (A₄) is actuated by the control unit (C) so that the organs defining the motion transmission group (33) are controlled so as to maintain the rotation of the output shaft (34) in direction (F), in order to continue actuating the final actuator (35).

In this functional variant, further, following the filling of the shell (4) with water coming from the third conduit (6) (figure 6), the third level detector (S₃) detects the maximum water level that the shell (4) can contain and sends this datum to the control and command unit (C), which, in turn, commands the first command device (A₁) to actuate the switching means (8) so as to occlude the third conduit (6) so as to convey the flow of water coming from the main conduit (P) into the discharge conduit (7) (figure 7).

On reaching the minimum level of water contained in the tank (2), detected by the first level detector (S₁), the control and command unit (C) will activate both the second command device (A₂), for determining the closing of the first closing device (21) to obstruct the outlet (20), and both the third command device (A₃), for determining the closing of the second closing device (41), and the first command device (A₁), which will command the switching means (8) for newly conveying the flow of water coming from the primary conduit (P) into the second conduit (5) so that the flow of water is channelled into the tank (2) and newly begins filling it and, as described above, initialising the rising cycle and, successively, the descending cycle of the shell (4) in the tank (2).

The apparatus for production of energy (1) of the present invention, illustrated schematically, exhibits advantageous characteristics, as the apparatus is realised by the combination of means and organs in themselves of known type which, appropriately combined with one another, exploiting the Archimedes principle, determine the production of energy from a renewable source, specifically part of the flow of a stream/river.

The simple channelling of the water into the tank (2) determines the upwards displacement of the shell (4) and, thanks to the presence of the transmission system, it is possible to convert the linear motion generated into a rotary motion which will be associated to the final actuator (35) for production of energy.

The technical specifications schematically show that the upwards and downwards vertical movement of the shell (4) internally of the tank (2) originates an infinitely repeatable cycle: in fact, following filling and emptying of the tank (2) this vertical motion occurs in both directions, which movement, following the various detections, controls and commands of the devices associated to the apparatus by a suitably programmed control and command unit (C), is repeated as long as the apparatus is supplied.

Thus a cycle is originated which determines the rising/descent of the shell (2) and consequently the continuous actuation of the transmission system for the production of energy.

An advantage associated to the operating variant of the apparatus derives from the fact that the descent step is facilitated by the introduction of at least a part of the flow of water internally of the shell (4); this descent is also facilitated by the weight of the volume of water contained in the shell (4).

The apparatus (1) of the invention thus enables production of energy by exploiting a renewable source with the advantage of producing "clean" energy, an aspect of particular significance, as it can be contrasted to the traditional energies obtained from fossil sources.

The apparatus (1) offers a further advantage, as it is simple to realise and for the actuation of which no particularly specialised technical knowledge is required; its realisation is envisaged in proximity of a source found in nature (stream/river water) and therefore potentially "infinite", with a small environmental impact.

The apparatus (1) further enables obtaining renewable energy for the future at a competitive price, thus solving the large problem of the every-growing demand for energy.

It is however understood that the foregoing has been described by way of nonlimiting example, and that therefore any modifications in detail, as well as variations in shape and dimensions of the described components, are presumed to fall within the protective scope, as in the following claims.

## Claims

1. An apparatus for production of energy from a renewable source, comprising: a supply system (S) of a liquid; a tank (2), internally of which at least a part of a flow of the liquid is channelled; a shell (4) positioned internally of the tank (2), vertically guided by guide means (3) constrained at least to the structure of the tank (2) so as to be vertically moved upwards or downwards based on a respective filling or emptying of the tank (2) with or from said liquid; first discharge means, (20) associated to the tank (2), for emptying the liquid from the tank (2); second discharge means, (40) associated to the shell (4) for emptying the liquid from the shell (4); a transmission system actuated by the vertical movement in both directions of the shell (4) internally of the tank (2) provided for converting a linear motion into a continuous rotary motion for production of energy actuated by a corresponding actuator, the apparatus being **characterised in that** the liquid supply system comprises: a primary conduit (P) where at least a part of the liquid of the renewable source is channelled; a second conduit (5) opening internally of the tank (2); a third conduit (6), destined, following detection of the maximum liquid level contained in the tank (2), to introduce a part of the liquid internally of the shell (4) so as to facilitate the downwards vertical movement of the shell (4); a discharge conduit (7); switching means (8) associated to the primary conduit (P) which channel, according to predefined criteria, the liquid from the primary conduit (P) into the second conduit (5), or into the third conduit (6), or into the discharge conduit (7); a first command device (A₁), destined to control and actuate the switching means (8) for determining the opening/closing of the second conduit (5), or third conduit (6), or discharge conduit (7).

2. The apparatus of claim 1, **characterised in that** the first discharge means comprise: at least an outlet (20), realised on a bottom of the tank (2) and to which a first closing device (21) is associated, the first closing device (21) being appropriately controlled and actuated in opening/closing by a second command device (A₂), the outlet (20) communicating via a fourth conduit (9) with the discharge conduit (7); a first level detector (S₁), associated to an internal wall of the tank (2) in proximity of a bottom thereof, for detecting a predetermined minimum level of liquid present in the tank (2) with a consequent deactivation of the second command device (A₂); a second level detector (S₂), associated to an internal wall of the tank (2) in proximity of the upper edge thereof, for detecting a predetermined maximum level of liquid contained in the tank (2) with a consequent actuation of the second command device (A₂).

3. The apparatus of claim 1, **characterised in that** the second discharge means comprise: at least an opening (40), realised on the bottom of the shell (4) to which a second closing device (41) is associated, the second closing device (41) being appropriately controlled in opening/closing by a third command device (A₃); at least a third level detector (S₃) associated to the internal wall of the shell (4) in proximity of the upper edge, for detecting a predetermined maximum level of liquid contained in the shell (4) with a consequent actuation of the third command device (A₃).

4. The apparatus of claim 1, **characterised in that** the transmission system comprises: detecting means of the vertical movement (30) of the shell (4), which couple with movement means (31) associated to a shaft (32) connected to a motion transmission group (33) which drives an output shaft (34) and, consequently, a final actuator (35); a fourth command device (A₄) for controlling the motion transmission group (33) so as to define a motion according to a single direction (F) of the output shaft (34) for actuating the final actuator (35).

5. The apparatus of claim 4, **characterised in that** the detecting means of the vertical movement (30) are defined by at least a rack, externally blocked on the shell (4) and parallel to at least a guide means (3), and **in that** the movement means (31) are defined by at least a pinion connected to the motion transmission group (33).

6. The apparatus of the preceding claims, **characterised in that** it comprises a command and control unit (C) which manages the first, second, third, fourth command device (A₁, A₂, A₃, A₄) by mean of connections (a, c, d, b) and receives data detected by the first, second and third level detectors (S₁, S₂, S₃), with the first two detectors being associated to the tank (2) and the third detector being associated to the shell (4).

## Patentansprüche

1. Vorrichtung zur Energiegewinnung aus erneuerbarer Quelle, Folgendes beinhaltend: ein Zufuhrsystem (S) zum Zuführen einer Flüssigkeit; einen Tank (2), in den zumindest ein Teil einer Strömung der Flüssigkeit eingeleitet wird; eine Schale (4), die im Innern des Tanks (2) angeordnet ist, und vertikal von Führungsmitteln (3) geführt wird, die zumindest an der Struktur des Tanks (2) befestigt sind, so dass sie senkrecht nach oben beziehungsweise nach unten bewegt werden kann, wenn die Flüssigkeit in den Tank (2) eingefüllt beziehungsweise aus diesem entleert wird; erste Auslassmittel (20), die mit dem Tank (2) verbunden sind, zum Entleeren der Flüssigkeit aus dem Tank (2); zweite Auslassmittel (40), die mit der Schale (4) verbunden sind, zum Entleeren der Flüssigkeit aus der Schale (4); ein Übertragungssystem, das durch die Senkrechtbewegung in beiden Richtungen der Schale (4) im Innern des Tanks (2) betätigt wird und dafür vorgesehen ist, eine lineare Bewegung in eine kontinuierliche Drehbewegung für die Energieerzeugung umzuwandeln, die durch einen entsprechendes Stellglied betätigt wird, wobei die Vorrichtung **dadurch gekennzeichnet ist, dass** das Zufuhrsystem für die Flüssigkeit Folgendes umfasst: eine primäre Leitung (P), in die zumindest ein Teil der Flüssigkeit der erneuerbaren Energiequelle geleitet wird; eine zweite Leitung (5), die in das Innere des Tanks (2) mündet; eine dritte Leitung (6), die dafür bestimmt ist, infolge der Erfassung des Höchstpegels der Flüssigkeit im Tank (2) einen Teil der Flüssigkeit in das Innere der Schale (4) einzuleiten, um die senkrechte Abwärtsbewegung der Schale (4) zu erleichtern; eine Auslassleitung (7); Umlenkmittel (8), die mit der primären Leitung (P) verbunden sind und dazu dienen, nach vorgegebenen Kriterien die Flüssigkeit von der primären Leitung (P) in die zweite Leitung (5), oder in die dritte Leitung (6), oder in die Auslassleitung (7) umzuleiten; eine erste Befehlsvorrichtung (A₁), die dafür bestimmt ist, die Umlenkmittel (8) zu steuern und zu betätigen, um das Öffnen/Schließen der zweiten Leitung (5), oder der dritten Leitung (6), oder der Auslassleitung (7) zu bewirken.

2. Vorrichtung nach Anspruch 1, **dadurch gekennzeichnet, dass** die ersten Auslassmittel beinhalten: zumindest einen Auslass (20), der am Boden des Tanks (2) angefertigt ist und mit dem eine erste Verschlussvorrichtung (21) verbunden ist, wobei das Öffnen/Schließen der ersten Verschlussvorrichtung (21) in geeigneter Weise durch eine zweite Befehlsvorrichtung (A₂) angesteuert und betätigt wird, und der Auslass (20) über eine vierte Leitung (9) mit der Auslassleitung (7) in Verbindung steht; einen ersten Pegeldetektor (S₁), der mit einer Innenwand des Tanks (2) in der Nähe von dessen Boden verbunden ist und dazu dient, einen vorgegebenen Mindestpegel der im Tank (2) enthaltenen Flüssigkeit zu erfassen, mit der darauf folgenden Deaktivierung der zweiten Befehlsvorrichtung (A₂); einen zweiten Pegeldetektor (S₂), der mit einer Innenwand des Tanks (2) in der Nähe von dessen Oberkante verbunden ist und dazu dient, einen vorgegebenen Höchstpegel der im Tank (2) enthaltenen Flüssigkeit zu erfassen, mit der darauf folgenden Betätigung der zweiten Befehlsvorrichtung (A₂).

3. Vorrichtung nach Anspruch 1, **dadurch gekennzeichnet, dass** die zweiten Auslassmittel Folgendes beinhalten: zumindest eine Öffnung (40), die am Boden der Schale (4) angefertigt ist und mit der eine zweite Verschlussvorrichtung (41) verbunden ist, wobei das Öffnen/Schließen der zweiten Verschlussvorrichtung (41) in geeigneter Weise durch eine dritte Befehlsvorrichtung (A₃) angesteuert und betätigt wird; zumindest einen dritten Pegeldetektor (S₃), der mit der Innenwand der Schale (4) in der Nähe von deren Oberkante verbunden ist und dazu dient, einen vorgegebenen Höchstpegel der in der Schale (4) enthaltenen Flüssigkeit zu erfassen, mit der darauf folgenden Betätigung der dritten Befehlsvorrichtung (A₃).

4. Vorrichtung nach Anspruch 1, **dadurch gekennzeichnet, dass** das Übertragungssystem Folgendes beinhaltet: Erfassungsmittel der Senkrechtbewegung (30) der Schale (4), die an Antriebsmittel (31) gekoppelt sind, die mit einer Welle (32) verbunden sind, die mit einer Bewegungsübertragungsgruppe (33) für den Antrieb einer Abtriebswelle (34) und damit auch eines Endstellglieds (35) verbunden ist; eine vierte Befehlsvorrichtung (A₄) zur Ansteuerung der Bewegungsübertragungsgruppe (33), um eine Bewegung entlang einer einzigen Richtung (F) der Abtriebswelle (34) für die Betätigung des Endstellglieds (35) zu definieren.

5. Vorrichtung nach Anspruch 4, **dadurch gekennzeichnet, dass** die Erfassungsmittel der Senkrechtbewegung (30) durch zumindest eine Zahnstange definiert sind, die extern an der Schale (4) fixiert und parallel zu zumindest einem Führungsmittel (3) ist, und dadurch, dass die Antriebsmittel (31) durch zumindest ein Ritzel definiert sind, das mit der Bewegungsübertragungsgruppe (33) verbunden ist.

6. Vorrichtung nach den vorhergehenden Ansprüchen, **dadurch gekennzeichnet, dass** sie eine Befehls- und Steuereinheit (C) beinhaltet, welche die erste, zweite, dritte, vierte Befehlsvorrichtung (A₁, A₂, A₃, A₄) über Verbindungen (a, c, d, b) verwaltet und die von dem ersten, zweiten und dritten Pegeldetektor (S₁, S₂, S₃) erfassten Daten empfängt, wobei die ersten beiden Detektoren mit dem Tank (2) verbunden sind und der dritte Detektor mit der Schale (4) verbunden ist.

## Revendications

1. Un appareil pour la production d'énergie à partir d'une source renouvelable, comprenant : un système (S) d'alimentation d'un liquide ; un réservoir (2), à l'intérieur duquel au moins une partie d'un flux du liquide est canalisée ; une coque (4) positionnée à l'intérieur du réservoir (2), guidée verticalement par des moyens de guidage (3) contraints au moins à la structure du réservoir (2) de manière à être mue verticalement vers le haut ou vers le bas en fonction d'un remplissage ou vidage respectif du réservoir (2) avec ledit ou dudit liquide ; des premiers moyens d'évacuation (20), associés au réservoir (2), pour vider le liquide dudit réservoir (2) ; des deuxièmes moyens d'évacuation (40), associés à la coque (4), pour vider le liquide de ladite coque (4) ; un système de transmission, actionné par le mouvement vertical dans les deux directions de la coque (4) à l'intérieur du réservoir (2), prévu pour convertir un mouvement linéaire en un mouvement de rotation continu pour la production d'énergie actionnée par un actionneur correspondant, l'appareil étant **caractérisé en ce que** le système d' alimentation de liquide comprend : un conduit primaire (P) où au moins une partie du liquide de la source renouvelable est canalisée ; un deuxième conduit (5) débouchant à l'intérieur du réservoir (2) ; un troisième conduit (6), destiné, suite à la détection du niveau maximum de liquide contenu dans le réservoir (2), à introduire une partie du liquide à l'intérieur de la coque (4) de manière à faciliter le mouvement vertical vers le bas de ladite coque (4) ; un conduit d'évacuation (7) ; des moyens de déviation (8) associés au conduit primaire (P) qui canalisent, selon des critères prédéfinis, le liquide du conduit primaire (P) dans le deuxième conduit (5), ou dans le troisième conduit (6), ou dans le conduit d'évacuation (7) ; un premier dispositif de commande (A₁), destiné à contrôler et à actionner les moyens de déviation (8) pour déterminer l'ouverture/fermeture du deuxième conduit (5), ou troisième conduit (6), ou conduit d'évacuation (7).

2. L'appareil selon la revendication 1, **caractérisé en ce que** les premiers moyens d'évacuation comprennent: au moins une sortie (20), réalisée sur un fond du réservoir (2) et à laquelle est associé un premier dispositif de fermeture (21), ledit premier dispositif de fermeture (21) étant opportunément contrôlé et actionné en ouverture/fermeture par un deuxième dispositif de commande (A₂), la sortie (20) communiquant à travers un quatrième conduit (9) avec le conduit d'évacuation (7) ; un premier détecteur de niveau (S₁), associé à une paroi intérieure du réservoir (2) à proximité d'un fond de celui-ci, pour détecter un niveau minimum prédéfini de liquide présent dans le réservoir (2) avec désactivation conséquente du deuxième dispositif de commande (A₂) ; un deuxième détecteur de niveau (S₂), associé à une paroi intérieure du réservoir (2) à proximité du bord supérieur de celui-ci, pour détecter un niveau maximum prédéfini de liquide contenu dans le réservoir (2) avec activation conséquente du deuxième dispositif de commande (A₂).

3. L'appareil selon la revendication 1, **caractérisé en ce que** les deuxièmes moyens d'évacuation comprennent : au moins une ouverture (40), réalisée sur le fond de la coque (4), à laquelle est associé un deuxième dispositif de fermeture (41), ledit deuxième dispositif de fermeture (41) étant opportunément contrôlé en ouverture/fermeture par un troisième dispositif de commande (A₃) ; au moins un troisième détecteur de niveau (S₃) associé à la paroi intérieure de la coque (4) à proximité du bord supérieur, pour détecter un niveau maximum prédéfini de liquide contenu dans la coque (4) avec activation conséquente du troisième dispositif de commande (A₃).

4. L'appareil selon la revendication 1, **caractérisé en ce que** le système de transmission comprend : des moyens (30) de détection du mouvement vertical de la coque (4), qui s'accouplent avec des moyens d'actionnement (31) associés à un arbre (32) relié à un groupe de transmission du mouvement (33) qui entraîne un arbre de sortie (34) et, en conséquence, un actionneur final (35) ; un quatrième dispositif de commande (A₄) pour contrôler le groupe de transmission du mouvement (33) de manière à définir un mouvement selon une seule direction (F) de l'arbre de sortie (34) pour actionner l'actionneur final (35).

5. L'appareil selon la revendication 4, **caractérisé en ce que** les moyens (30) de détection du mouvement vertical sont définis par au moins une crémaillère, bloquée extérieurement sur la coque (4) et parallèle à au moins un moyen de guidage (3), et **en ce que** les moyens d'actionnement (31) sont définis par au moins un pignon relié au groupe de transmission du mouvement (33).

6. L'appareil selon les revendications précédentes, **caractérisé en ce qu'**il comprend une unité de commande et de contrôle (C) qui gère le premier, deuxième, troisième, quatrième dispositif de commande (A₁, A₂, A₃, A₄) au moyen de connexions (a, c, d, b) et reçoit les données détectées par les premier, deuxième et troisième détecteurs de niveau (S₁, S₂, S₃), les deux premiers détecteurs étant associés au réservoir (2) et le troisième détecteur étant associé à la coque (4).
